# EUROPÄISCHE PATENTANMELDUNG

(11) **EP 4 119 806 A1**
(43) Veröffentlichungstag der Anmeldung: **18.01.2023**
(21) Anmeldenummer: 22182465.9
(22) Anmeldetag: 01.07.2022
(51) Int. Cl.: F16B 13/06

(54) **SPREIZANKER UND ANORDNUNG MIT DEM SPREIZANKER**

(30) Priorität: 06.07.2021 DE 102021117403
(71) Anmelder: fischerwerke GmbH & Co. KG, 72178 Waldachtal (DE)
(72) Erfinder: Linka, Martin, 72160 Horb a.N. (DE); Schäuffele, Jürgen, 72178 Waldachtal (DE)
(74) Vertreter: Suchy, Ulrich Johannes

(57) **Zusammenfassung**

Die Erfindung betrifft einen Spreizanker (1) zu einer Befestigung eines Masts eines Verkehrszeichens an einem Ankerrohr (2), das mit Beton in einem Loch in einem Boden befestigt wird. Für einen guten Halt des Spreizankers (1) in dem Ankerrohr (2) schlägt die Erfindung vor, streifenförmige Spreizelemente (10) einer Spreizhülse (4) des Spreizankers (1) mit zwei axial versetzten, orthogonalen Nuten (14) zu versehen, die Gelenke (15, 16) bilden. Durch die Gelenke (15, 16) legen sich die Spreizelemente (10) bei einem Aufspreizen von innen vollflächig an das Ankerrohr (2) und innen vollflächig an einen kegelstumpfförmigen Spreizkörper (5) an.

## Beschreibung

Die Erfindung betrifft einen Spreizanker, der zu einer Befestigung in einem Ankerrohr aus Stahl oder einem anderen Metall vorgesehen ist, mit den Merkmalen des Oberbegriffs des Anspruchs 1 und eine Anordnung mit dem Spreizanker mit den Merkmalen des Oberbegriffs des Anspruchs 10. Der Spreizanker ist zu einer Befestigung eines Masts zur Befestigung eines Verkehrszeichens (umgangssprachlich: Verkehrsschild), einer Verkehrsampel, eines Straßenschilds oder eines sonstigen zu befestigenden Gegenstands an einem Ankerrohr, das in einem Boden befestigt ist, vorgesehen. Das Ankerrohr ist üblicherweise aus Stahl und im Boden in einem Fundament aus Beton einbetoniert. Mit "Mast" ist ein insbesondere senkrecht stehendes Profil, wie beispielsweise ein Rohr gemeint. Der Mast und der daran zu befestigende Gegenstand werde nachfolgend gemeinsam als "Befestigungsgegenstand" bezeichnet, der mit dem erfindungsgemäßen Spreizanker am Ankerrohr befestigt wird.

Die Europäische Patentanmeldung EP 0 955 414 B1 offenbart einen Spreizanker zur Befestigung eines Befestigungsgegenstands. Der Spreizanker weist eine Spreizhülse auf, die durch Einziehen eines Spreizkonus aufspreizbar ist. Spreizlaschen der Spreizhülse weisen an ihren Außenseiten eine sich in einer Umfangsrichtung erstreckende Rippe mit einem dreieckigen Rippenquerschnitt und einer umlaufenden Kante auf, die bei einem Aufspreizen der Spreizhülse in einem Ankerrohr von innen gegen einen Innenumfang des Rohrs gedrückt wird.

Aufgabe der Erfindung ist, einen Spreizanker vorzuschlagen, dessen axialer Halt in einem Ankerrohr aus Stahl verbessert ist.

Diese Aufgabe wird erfindungsgemäß durch einen Spreizanker mit den Merkmalen des Anspruchs 1 gelöst. Der erfindungsgemäße Spreizanker ist zu einer Befestigung in einem hier als "Ankerrohr" bezeichneten Rohr aus insbesondere Stahl oder einem anderen Metall vorgesehen, wobei die Erfindung eine Verankerung in einem nichtmetallischen Werkstoff nicht ausschließt. Das Ankerrohr wird zu einer Befestigung eines Befestigungsgegenstands in einem Boden befestigt, insbesondere indem es einbetoniert wird. Das Ankerrohr kann Bestandteil eines Gestells mit mehreren, beispielsweise drei oder vier zueinander parallelen Ankerrohren sein, das in dem Boden befestigt, insbesondere einbetoniert wird. Der Befestigungsgegenstand wird mit Hilfe des erfindungsgemäßen Spreizankers an dem Ankerrohr befestigt, wozu der Spreizanker durch eine Öffnung im Befestigungsgegenstand, beispielsweise durch eine Durchgangsbohrung in einer Flanschplatte, durchgeführt, in das Ankerrohr eingebracht und im Ankerrohr aufgespreizt wird. Andere Verwendungen des erfindungsgemäßen Spreizankers schließt die Erfindung nicht aus.

Der erfindungsgemäße Spreizanker weist eine Ankerachse, eine zu der Ankerachse koaxiale Spreizhülse mit mindestens einem Spreizelement und einen Spreizkörper, der zum Aufspreizen der Spreizhülse entlang der Ankerachse bewegbar ist, auf. Insbesondere weist die Spreizhülse Schlitze auf, die sich von einem Stirnende der Spreizhülse ausgehend über einen Teil einer Länge der Spreizhülse erstrecken. Insbesondere teilen die Schlitze die Spreizhülse in zylinderschalenförmige Spreizlaschen, die Spreizelemente der Spreizhülse bilden. Insbesondere korrespondiert der Außendurchmesser der Zylinderschalen zu dem Innendurchmesser des Ankerrohrs, in dem der Spreizanker befestigt werden soll, derart, dass die Spreizelemente der Spreizhülse in einem aufgespreizten Verankerungszustand flächig an der Innenwand des Ankerrohrs anliegen.

Der Spreizkörper weist beispielsweise die Form eines Kegelstumpfs, eines Pyramidenstumpfs oder eines Keils auf. Insbesondere ist der Spreizkörper kegelstumpfförmig. Der Spreizkörper weist eine Keilfläche für jedes Spreizelement der Spreizhülse auf, wobei der Spreizkörper eine gemeinsame Keilfläche für alle Spreizelemente oder für mehrere der Spreizelemente aufweisen kann. Insbesondere hat die gemeinsame Keilfläche die Form einer Mantelfläche eines Kegelstumpfs. Die Keilfläche verläuft schräg in einem Keilwinkel zu der Ankerachse des erfindungsgemäßen Spreizankers.

Das oder die Spreizelemente der Spreizhülse weisen eine Gegenkeilfläche auf, die beim Aufspreizen der Spreizhülse, das auch als Aufspreizen des Spreizankers aufgefasst werden kann, an der dem jeweiligen Spreizelement zugeordneten Keilfläche des Spreizkörpers anliegt. Zum Aufspreizen der Spreizhülse wird der Spreizkörper in Bezug auf die Spreizhülse in einer Spreizrichtung entlang der Ankerachse bewegt derart, dass die Keilfläche/n des Spreizkörpers die Spreizelemente der Spreizhülse radial zur Ankerachse nach außen, das heißt von der Ankerachse weg, beaufschlagen. Dieses "Auseinanderdrücken" der Spreizelemente kann als Aufspreizen der Spreizhülse beziehungsweise des Spreizankers aufgefasst werden.

In Bezug auf die Ankerachse verlaufen die Gegenkeilflächen der Spreizelemente der Spreizhülse des erfindungsgemäßen Spreizankers entgegengesetzt schräg zu der oder den Keilflächen des Spreizkörpers, wobei ein Keilwinkel der Keilfläche/n des Spreizkörpers gleich groß wie ein Gegenkeilwinkel der Gegenkeilflächen der Spreizelemente der Spreizhülse ist. Dadurch, dass der Keilwinkel gleich groß wie die der Gegenkeilwinkel ist, kommt es beim Aufspreizen zu einer Parallelverschiebung der Außenflächen der Spreizelemente weg von der Ankerachse nach außen zum Ankerrohr hin, wodurch eine flächige Anlage der Außenflächen am Ankerrohr möglich ist.

Vorzugsweise weisen alle Gegenkeilflächen den gleichen Gegenkeilwinkel auf, allerdings schließt die Erfindung Ausführungen des Spreizankers, dessen Spreizhülse Spreizelemente mit unterschiedlichen Gegenkeilwinkeln aufweist, nicht aus. In diesem Fall weisen auch die den jeweiligen Gegenkeilflächen zugeordneten Keilflächen des Spreizkörpers unterschiedliche, nämlich die gleichen Keilwinkel wie die Gegenkeilflächen, auf.

Der Keilwinkel ist ein Winkel zwischen der Ankerachse und der Keilfläche in einer Axialebene des Spreizankers. Der Gegenkeilwinkel ist ein Winkel zwischen der Gegenkeilfläche und einer der Ankerachse abgewandten Außenfläche des jeweiligen Spreizelements in einer Axialebene des Spreizankers.

Bei einem Aufspreizen zum Verankern des erfindungsgemäßen Spreizankers in einem beispielsweise zylindrischen Ankerrohr aus Stahl legen sich die Spreizelemente der Spreizhülse des erfindungsgemäßen Spreizankers von innen an einer zylindrischen Innenumfangsfläche des Ankerrohrs an, wobei die Außenflächen der Spreizelemente über ihre Erstreckung parallel zur Ankerachse an der Innenumfangsfläche des Ankerrohrs, und die Gegenkeilflächen der Spreizelemente an der oder den Keilfläche/n des Spreizkörpers anliegen. Die Außenflächen der Spreizelemente liegen linienförmig oder, wenn eine Krümmung der Außenflächen der Spreizelemente in der Umfangsrichtung an einen Radius der Innenumfangsfläche des Ankerrohrs angepasst ist, flächenförmig an der Innenumfangsfläche des Ankerrohrs an. Parallel zu der Ankerachse können die Außenflächen der Spreizelemente über die gesamte Erstreckung der Spreizelemente oder nur auf einem Abschnitt der Spreizelemente an der Innenumfangsfläche des Ankerrohrs anliegen. Vorzugsweise liegen die Außenflächen der Spreizelemente jedenfalls im Bereich der Keilfläche/n des Spreizkörpers oder der Gegenkeilflächen der Spreizelemente an der Innenumfangsfläche des Ankerrohrs an.

Durch die linienförmige, und insbesondere durch eine flächenförmige Anlage der Außenfläche/n des oder der Spreizelemente der in dem Ankerrohr aufgespreizten Spreizhülse ist ein axialer Halt des Spreizankers in dem Ankerrohr verbessert, wenn das Ankerrohr aus einem harten Werkstoff wie beispielsweise Stahl besteht, in das eine Kante oder Schneide eines Spreizelements nicht oder kaum eindringt, wenn das Spreizelement nicht aus einem härteren Werkstoff als das Ankerrohr besteht und nicht mit einer sehr hohen Spreizkraft aufgespreizt wird.

In einer bevorzugten Ausführung der Erfindung weist das mindestens eine Spreizelement der Spreizhülse des erfindungsgemäßen Spreizankers zwei in Richtung der Ankerachse zueinander versetzte Gelenke auf, derart, dass sich die Außenfläche des mindestens einen Spreizelements parallel zur Ankerachse ausrichten kann. Schwenkachsen der Gelenke verlaufen insbesondere orthogonal zur Ankerachse, womit zu einem gedachten, zur Ankerachse koaxialen Zylinder tangentiale Schwenkachsen gemeint sind, die die Ankerachse nicht schneiden. Insbesondere verlaufen immer zwei der Ankerachsen parallel zueinander.

Die Gelenke der Spreizhülse können erfindungsgemäß durch in einer Umfangsrichtung zu der Spreizhülse verlaufende Nuten gebildet sein. In bevorzugter Ausgestaltung der Erfindung sind die Nuten identisch oder weisen jedenfalls übereinstimmende Nutquerschnitte auf. Insbesondere verlaufen immer zwei der Nuten in Achsrichtung versetzt parallel zueinander.

In einer bevorzugten Ausgestaltung der Erfindung weist der Spreizkörper eine einzige umlaufende kegelstumpfförmige Keilfläche als gemeinsame Keilfläche für alle Spreizelemente der Spreizhülse auf. Die Gegenkeilflächen der Spreizelemente weisen bei dieser Ausführung die Form einer Hohlkegelstumpfschale auf, deren Gegenkeilwinkel entgegengesetzt und gleich groß sind wie der Keilwinkel des die Keilfläche des Spreizkörpers bildenden Kegelstumpfs. Dabei ist der Keilwinkel der halbe Kegelwinkel. Eine Hohlkegelstumpfschale ist eine Innenumfangsfläche eines Hohlkegelstumpfs in einem begrenzten Umfangsabschnitt des Hohlkegelstumpfs.

Zu einer Verbesserung des Halts in dem Ankerrohr sieht eine Ausgestaltung der Erfindung einen ersten Rändel an der oder den Außenfläche/n des oder der Spreizelements/e vor. Vorzugsweise weisen die Außenflächen der Spreizelemente einen Links-Rechts-Rändel (umgangssprachlich: Kreuzrändel) mit vorzugsweise erhöhten Spitzen auf. Möglich sind allerdings beispielsweise auch ein Linksrändel, ein Rechtsrändel oder ein Rändel mit umlaufenden Rillen.

Der erste Rändel erstreckt sich vorzugsweise von einem freien Ende der Spreizelemente bis zu einem dem freien Ende der Spreizelemente nahen ersten der beiden Gelenke. Mit anderen Worten: der Rändel erstreckt sich über den Teil der Außenflächen der Spreizelemente, der an der Innenumfangsfläche des Ankerrohrs anliegt, wenn die Spreizhülse in dem Ankerrohr aufgespreizt ist. Einen größeren ersten oder einen weiteren Rändel an anderen Stellen schließt die Erfindung nicht aus.

Damit ein großer Teil der Außenflächen der Spreizelemente der Spreizhülse des erfindungsgemäßen Spreizankers an der Innenumfangsfläche des Ankerrohrs anliegt, wenn die Spreizhülse in dem Ankerrohr aufgespreizt ist, sieht eine Ausgestaltung der Erfindung vor, dass ein Abstand der freien Enden der Spreizelemente von dem ersten Gelenk größer als ein Abstand der beiden Gelenke voneinander ist. Der erste Rändel erstreckt sich parallel zur Ankerachse vorzugsweise ebenfalls über eine größere Länge als der Abstand zwischen den beiden Gelenken der Spreizelemente.

Eine Ausgestaltung der Erfindung sieht streifenförmige und zur Ankerachse parallele Spreizelemente der Spreizhülse vor, wobei die Spreizelemente auch wendelförmig in einem vorzugsweise spitzen Winkel zu Axialebenen des Spreizankers, wellenförmig oder zick-zack-förmig verlaufen können.

Um den Spreizkörper zum Aufspreizen der Spreizhülse zwischen die Spreizelemente einziehen zu können, sieht eine Ausgestaltung der Erfindung eine Hülse mit einem zu der Ankerachse koaxialen Innengewindeloch als Spreizkörper vor.

Gegenstand des Anspruchs 10 ist die Anordnung des vorstehend erläuterten Spreizankers in einem Ankerrohr, das insbesondere aus Stahl ist und das insbesondere in einem Fundament einbetoniert ist. Das Ankerrohr kann Bestandteil eines Gestells mit mehreren und insbesondere zueinander parallelen Ankerrohren sein. Es werden vorzugsweise in allen oder jedenfalls in mehreren Ankerrohren erfindungsgemäße Spreizanker aufgespreizt. Es befinden sich zumindest das oder die Spreizelement/e in dem Ankerrohr, vorzugsweise befindet sich die Spreizhülse in dem Ankerrohr. Sie ist beziehungsweise wird durch Aufspreizen in dem Ankerrohr befestigt, was auch als Verankerung des Spreizankers in dem Ankerrohr aufgefasst werden kann.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: einen Achsschnitt eines in einem Ankerrohr aufgespreizten und verankerten Spreizankers gemäß der Erfindung;
- Figur 2: eine Seitenansicht eines Spreizkörpers des Spreizankers aus Figur 1,
- Figur 3: eine Seitenansicht einer Spreizhülse des Spreizankers aus Figur 1; und
- Figur 4: einen Achsschnitt der Spreizhülse aus Figur 3.

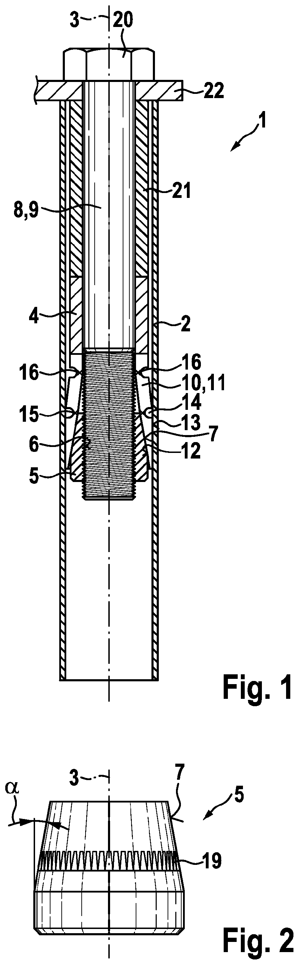

Der in Figur 1 dargestellte, erfindungsgemäße Spreizanker 1 ist zu einer Befestigung eines nicht dargestellten Befestigungsgegenstands, beispielsweise eines Masts mit einem daran angebrachten Verkehrszeichen (umgangssprachlich: Verkehrsschild), an einem Ankerrohr 2, das in einem Boden durch einbetonieren befestigt ist, vorgesehen.

Der Spreizanker 1 weist eine Ankerachse 3, eine zu der Ankerachse 3 koaxiale Spreizhülse 4 und einen zu der Ankerachse 3 ebenfalls koaxialen Spreizkörper 5 auf, der in Bezug auf die Spreizhülse 4 axial entlang der Ankerachse 3 verschiebbar oder allgemein bewegbar ist.

Der in Figur 2 als Einzelteil gezeichnete Spreizkörper 5 weist im Ausführungsbeispiel ein ihn axial durchsetzendes Innengewindeloch 6 und außen eine kegelstumpfförmige Umfangsfläche auf, die eine Keilfläche 7 des Spreizkörpers 5 bildet. In das Innengewindeloch 6 ist eine Ankerschraube 8 geschraubt, die als Bestandteil des Spreizankers 1 und deren Schraubenschaft als Ankerschaft 9 des Spreizankers 1 aufgefasst werden kann. Anstelle der Ankerschraube 8 kann beispielsweise auch eine Gewindestange als Ankerschaft in das Innengewindeloch 6 des Spreizkörpers 5 geschraubt sein oder werden (nicht dargestellt).

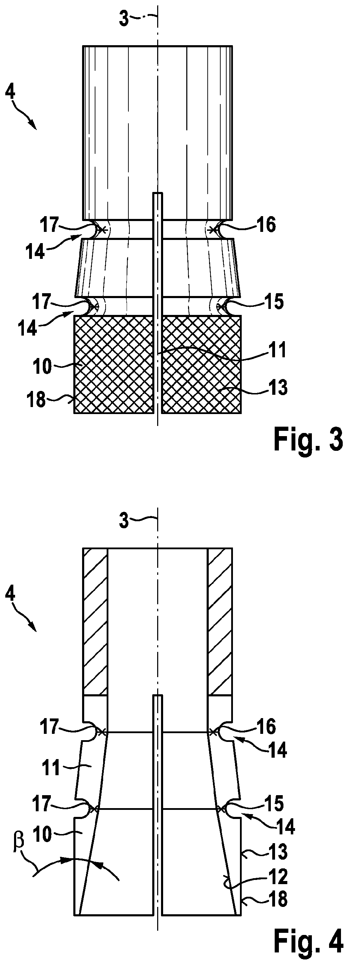

Im Ausführungsbeispiel ist die in Figuren 3 und 4 als Einzelteil gezeichnete Spreizhülse 4 zylinderrohrförmig und weist zylinderschalenförmige Spreizelemente 10 auf, die durch Längsschlitze 11 gebildet sind, die sich in einander kreuzenden Axialebenen der Spreizhülse 4 von einem ersten Stirnende über einen Teil einer Länge der Spreizhülse 4 - im Ausführungsbeispiel über etwas mehr als eine Hälfte der Länge der Spreizhülse 4 - erstrecken.

Im Bereich der Spreizelemente 10 weitet sich die Spreizhülse 4 innen kegelstumpfförmig in Richtung des ersten Stirnendes der Spreizhülse 4 auf, wodurch der Keilfläche 7 des Spreizkörpers 5 zugewandte Innenflächen der Spreizelemente 10 der Spreizhülse 4 als hohlkegelstumpfschalenförmige Gegenkeilflächen 12 ausgebildet sind. "Hohlkegelstumpfschalenförmig" bedeutet, dass die die Gegenkeilflächen 12 bildenden Innenflächen der Spreizelemente 10 der Spreizhülse 4 die Form von streifenförmigen, in einer Umfangsrichtung hohlrunden Teilflächen einer Innenfläche eines Hohlkegelstumpfs aufweisen, die sich in der Umfangsrichtung über einen begrenzten Umfangsabschnitt des Hohlkegelstumpfs erstrecken.

Der Spreizkörper 5 befindet sich an dem ersten Stirnende der Spreizhülse 4 beziehungsweise ist oder wird vom ersten Stirnende der Spreizhülse 4 her zwischen die Spreizelemente 10 der Spreizhülse 4 eingezogen. Ein durchmesserkleineres Ende des Spreizkörpers 5 ist der Spreizhülse 4 zugewandt. Ein Keilwinkel α der Keilfläche 7 des Spreizkörpers 5 ist gleich groß wie ein Gegenkeilwinkel β der Spreizelemente 10 der Spreizhülse 4, wobei die Gegenkeilflächen 12 der Spreizelemente 10 der Keilfläche 7 des Spreizkörpers 5 entgegengesetzt orientiert sind. Der Keilwinkel α ist ein Winkel zwischen der Keilfläche 7 des Spreizkörpers 5 und einer Achse des Spreizkörpers 5, die mit der Ankerachse 3 übereinstimmt. Der Keilwinkel α ist somit halb so groß wie ein Kegelwinkel der kegelstumpfförmigen Keilfläche 7 des Spreizkörpers 5.

Der Gegenkeilwinkel β ist ein Winkel zwischen der Gegenkeilfläche 12 und einer der Gegenkeilfläche 12 abgewandten Außenfläche 13 der Spreizelemente 10 der Spreizhülse 4 des erfindungsgemäßen Spreizankers 1 in einer Axialebene der Spreizhülse 4. Der Gegenkeilwinkel β ist somit halb so groß wie ein Kegelwinkel der hohlkegelstumpfschalenförmigen Gegenkeilflächen 12 der Spreizelemente 10. Mit der kegelstumpfförmigen Keilfläche 7 weist der Spreizkörper 5 eine gemeinsame Keilfläche 7 für alle Spreizelemente 10 auf.

Die Spreizelemente 10 der Spreizhülse 4 weisen in der Umfangsrichtung verlaufende Nuten 14 in ihrer Außenfläche 13 auf, die im Ausführungsbeispiel einen halbkreisförmigen Nutgrund aufweisen, die allerdings auch einen anderen, beispielsweise einen eckigen- oder V-förmigen Nutquerschnitt aufweisen können. Die in der Umfangsrichtung der Spreizhülse 4 verlaufenden Nuten 14 bilden Gelenke 15, 16, an denen die Spreizelemente 10 knicken, das heißt um gedachte, zu der Ankerachse 3 orthogonale Schwenkachsen 17 schwenken können. "Orthogonal" bedeutet, dass die Schwenkachsen 17 tangential zur Spreizhülse 4 verlaufen.

Jedes Spreizelement 10 weist zwei axial zueinander versetzte Nuten 14 beziehungsweise Gelenke 15, 16 auf, wobei ein Abstand der beiden Nuten 14 beziehungsweise Gelenke 15, 16 in axialer Richtung der Spreizhülse 4 kleiner als ein Abstand einer ersten der beiden Nuten 14 beziehungsweise eines ersten der beiden Gelenke 15 von dem ersten Stirnende der Spreizhülse 4 ist. Als erstes Gelenk 15 wird das dem ersten, dem Spreizkörper 5 zugewandten Stirnende der Spreizhülse 4 nähere Gelenk 15 bezeichnet.

Zwischen dem ersten Gelenk 15 und dem ersten Stirnende der Spreizhülse 4 weisen die zylinderschalenförmigen Außenflächen 13 der Spreizelemente 10 der Spreizhülse 4 des erfindungsgemäßen Spreizankers 1 einen ersten Rändel 18 auf, um einen Halt des aufgespreizten Spreizankers 1 in dem Ankerrohr 2 aus Stahl zu verbessern. Im Ausführungsbeispiel ist der erste Rändel 18 ein Links-Rechts-Rändel mit erhöhten Spitzen, der auch als "Kreuzrändel" bezeichnet wird.

Um ein Mitdrehen des Spreizkörpers 5 mit der Ankerschraube 8 zu verhindern, weist der Spreizkörper 5 auf seiner Keilfläche 7 ebenfalls einen umlaufenden zweiten Rändel 19 auf, der im Ausführungsbeispiel als zweiter Rändel 19 mit achsparallelen Rillen ausgeführt ist. Der zweite Rändel 19 erstreckt sich im Ausführungsbeispiel über etwa 1/4 bis 1/5 einer Erstreckung der Keilfläche 7 in axialer Richtung.

Zwischen einem Schraubenkopf 20 der Ankerschraube 8 und der Spreizhülse 4, das heißt an einem dem Spreizkörper 5 abgewandten zweiten Stirnende der Spreizhülse 4, ist eine Distanzhülse 21, die im Ausführungsbeispiel aus Kunststoff besteht, zu einer axialen Abstützung der Spreizhülse 4, als Hohllagenausgleich und zu einer Abdichtung angeordnet. Die Distanzhülse 21 wird von der Ankerschraube 8 beziehungsweise dem Ankerschaft 9 durchsetzt und ist wie die Spreizhülse 4 und der Spreizkörper 5 koaxial zur Ankerachse 3.

Die Spreizhülse 4, der Spreizkörper 5 und die Ankerschraube 8 beziehungsweise der Ankerschaft 9 bestehen im Ausführungsbeispiel aus Stahl.

Zu einer Befestigung beziehungsweise Verankerung des Spreizankers 1 in dem Ankerrohr 2 aus Stahl wird der Spreizanker 1 mit dem Spreizkörper 5 und den Spreizelementen 10 der Spreizhülse 4 voraus in das Ankerrohr 2 eingebracht derart, dass sich die Spreizelemente 10 in dem Ankerrohr 2 befinden und vorzugsweise die Distanzhülse 21 bündig mit einem Stirnende des Ankerrohrs 2 ist.

Durch Drehen der Ankerschraube 8 wird der Spreizkörper 5 von dem ersten Stirnende der Spreizhülse 4 her zwischen die Spreizelemente 10 gezogen, wobei die Gegenkeilflächen 12 an den Innenseiten der Spreizelemente 10 in Anlage an der Keilfläche 7 des Spreizkörpers 5 kommen und von der Keilfläche 7 auseinander gedrückt, das heißt radial von der Ankerachse 3 weg nach außen gedrückt werden, was als Aufspreizen der Spreizelemente 10, der Spreizhülse 4 und des Spreizankers 1 aufgefasst werden kann. Dadurch, dass der Keilwinkel α gleich groß wie der Gegenkeilwinkel β ist, kommt es beim Aufspreizen zu einer Parallelverschiebung der Außenfläche 13 weg von der Ankerachse 3 nach außen zum Ankerrohr 2 hin.

Durch das Aufspreizen werden die Spreizelemente 10 von innen flächig gegen das Ankerrohr 2 gedrückt, wodurch der Spreizanker 1 durch Reibschluss der Spreizelemente 10 mit dem Ankerrohr 2 im Ankerrohr 2 gehalten, das heißt verankert ist. Der erste Rändel 18 an den Außenflächen 13 der Spreizelemente 10 zwischen den ersten Gelenken 15 und dem ersten Stirnende der Spreizhülse 4 verbessert den Halt des aufgespreizten Spreizankers 1 im Ankerrohr 2.

Durch das Andrücken der Spreizelemente 10 beim Aufspreizen von innen gegen das Ankerrohr 2 richten sich die Außenflächen 13 der Spreizelemente 10 zwischen den ersten Gelenken 15 und dem ersten Stirnende der Spreizhülse 4 achsparallel zur Ankerachse 3 aus, wobei sie an den Gelenken 15, 16 um die zur Ankerachse 3 orthogonalen Schwenkachsen 17 schwenken. Durch das achsparallele Ausrichten der Außenflächen 13 liegen die den ersten Rändel 18 aufweisenden Außenflächen 13 der Spreizelemente 10 zwischen den ersten Gelenken 15 und dem ersten Stirnende der Spreizhülse 4 vollflächig innen am Ankerrohr 2 an. Ebenfalls durch das achsparallele Ausrichten der Außenflächen 13 der Spreizelemente 10 legen sich die hohlkegelstumpfschalenförmigen Gegenkeilflächen 12 an den Innenseiten der Spreizelemente 10 der Spreizhülse 4 vollflächig an die kegelstumpfförmige Keilfläche 7 des Spreizkörpers 5 an. Der Gegenkeilwinkel β der Gegenkeilflächen 12 ist, wie oben beschrieben, gleich groß wie der Keilwinkel α der Keilfläche 7 und die Gegenkeilflächen 12 sind der Keilfläche 7 entgegengesetzt orientiert.

Der Spreizanker 1 in dem Ankerrohr 2 bildet eine erfindungsgemäße Anordnung. Das Ankerrohr 2 wird beispielsweise mit Beton in einem Loch in einem Boden befestigt. Das Ankerrohr 2 kann Bestandteil eines nicht dargestellten Gestells sein, das mehrere, beispielsweise drei oder vier zueinander parallele Ankerrohre 2 aufweist und das mit Beton in dem Loch im Boden befestigt wird.

Die Ankerschraube 8 wird durch ein Loch in einer Fußplatte 22 eines nicht dargestellten Masts, der auf einer dem Ankerrohr 2 gegenüberliegenden Seite von einer Mitte oder exzentrisch von der Fußplatte 22 absteht, durchgesteckt, durch die Distanzhülse 21 und die Spreizhülse 4 durchgeführt und in das Innengewindeloch 6 des Spreizkörpers 5 geschraubt.

### Bezugszeichenliste

- α: Keilwinkel
- β: Gegenkeilwinkel
- 1: Spreizanker
- 2: Ankerrohr
- 3: Ankerachse
- 4: Spreizhülse
- 5: Spreizkörper
- 6: Innengewindeloch
- 7: Keilfläche
- 8: Ankerschraube
- 9: Ankerschaft
- 10: Spreizelement
- 11: Längsschlitz
- 12: Gegenkeilfläche
- 13: Außenfläche
- 14: Nut
- 15: erstes Gelenk
- 16: zweites Gelenk
- 17: Schwenkachse
- 18: erster Rändel
- 19: zweiter Rändel
- 20: Schraubenkopf
- 21: Distanzhülse
- 22: Fußplatte

## Patentansprüche

1. Spreizanker (1) zu einer Befestigung in einem Ankerrohr (2), mit einer Ankerachse (3), mit einem zu der Ankerachse (3) koaxialen Spreizkörper (5), mit einer zu der Ankerachse (3) koaxialen Spreizhülse (4), die mindestens ein Spreizelement (10) aufweist, wobei der Spreizkörper (5) axial in Richtung der Ankerachse (3) in die Spreizhülse (4) bewegbar ist, wobei der Spreizkörper (5) eine Keilfläche (7) aufweist, die schräg in einem Keilwinkel (a) zu der Ankerachse (3) verläuft, an der das Spreizelement (10) mit einer Gegenkeilfläche (12) anliegt, wobei die Keilfläche (7) die Gegenkeilfläche (12) quer zur Ankerachse (3) beaufschlagt, wenn der Spreizkörper (5) axial in die Spreizhülse (4) bewegt wird, derart, dass eine Außenfläche (13) des Spreizelements (10) radial von der Ankerachse (3) weg bewegt wird, **dadurch gekennzeichnet, dass** die Gegenkeilfläche (12) entgegengesetzt schräg zu der Keilfläche (7) verläuft und der Keilwinkel (a) gleich groß wie ein Gegenkeilwinkel (β) ist, der von der Gegenkeilfläche (12) und der Außenfläche (13) eingeschlossen ist.

2. Spreizanker nach Anspruch 1, **dadurch gekennzeichnet, dass** das Spreizelement (10) zwei axial zueinander versetzte Gelenke (15, 16) aufweist, deren Schwenkachsen (17) orthogonal zur Ankerachse (3) verlaufen.

3. Spreizanker nach Anspruch 2, **dadurch gekennzeichnet, dass** das Spreizelement (10) in einer Umfangsrichtung der Spreizhülse (4) verlaufende Nuten (14) aufweist, die die Gelenke (15, 16) bilden.

4. Spreizanker nach einem oder mehreren der vorhergehenden Ansprüche, **dadurch gekennzeichnet, dass** die Keilfläche (7) des Spreizkörpers (5) kegelstumpfförmig ist und die Gegenkeilflächen (12) des Spreizelements (10) hohlkegelstumpfschalenförmig sind.

5. Spreizanker nach einem oder mehreren der vorhergehenden Ansprüche, **dadurch gekennzeichnet, dass** das Spreizelement (10) einen ersten Rändel (18) an der dem Spreizkörper (5) abgewandten Außenfläche (13) aufweist.

6. Spreizanker nach Anspruch 5, **dadurch gekennzeichnet, dass** sich der erste Rändel (18) von einem freien Stirnende des Spreizelements (10) bis zu einem ersten, dem freien Stirnende nahen der beiden Gelenke (15) erstreckt.

7. Spreizanker nach Anspruch 5 oder 6, **dadurch gekennzeichnet, dass** eine Erstreckung des ersten Rändels (18) in axialer Richtung der Spreizhülse (4) größer als ein Abstand der beiden Gelenke (15, 16) des Spreizelements (10) in axialer Richtung der Spreizhülse (4) voneinander ist.

8. Spreizanker nach einem oder mehreren der vorhergehenden Ansprüche, **dadurch gekennzeichnet, dass** die Spreizhülse (4) mehrere Spreizelemente (10) aufweist, die sich streifenförmig achsparallel zur Ankerachse (3) erstrecken.

9. Spreizanker nach einem oder mehreren der vorhergehenden Ansprüche, **dadurch gekennzeichnet, dass** der Spreizkörper (5) eine Hülse mit einem zu der Ankerachse (3) koaxialen Innengewindeloch (6) ist.

10. Anordnung mit einem Spreizanker nach einem oder mehreren der vorhergehenden Ansprüche, **dadurch gekennzeichnet, dass** sich das mindestens eine Spreizelement (10) der Spreizhülse (4) des Spreizankers (1) in dem Ankerrohr (2) befindet.
